# EUROPEAN PATENT APPLICATION

(11) **EP 4 800 129 A1**
(43) Date of publication of application: **02.09.2026**
(21) Application number: 25779094.9
(22) Date of filing: 08.01.2025
(51) Int. Cl.: C21D 8/12, C22C 38/00, C22C 38/04, C22C 38/60, H01F 1/147

(54) **METHOD FOR PRODUCING ORIENTED ELECTROMAGNETIC STEEL SHEET**

(30) Priority: 27.03.2024 JP 2024052409
(71) Applicant: JFE Steel Corporation, Tokyo 100-0011 (JP)
(72) Inventor: UEDA, Kenta, Tokyo 100-0011 (JP); IMAMURA, Takeshi, Tokyo 100-0011 (JP); YAMAGUCHI, Hiroi, Tokyo 100-0011 (JP)
(74) Representative: Haseltine Lake Kempner LLP
(86) International application number: PCT/JP2025/000395
(87) International publication number: WO 2025/203984

(57) **Abstract**

Provided is a method of producing a grain-oriented electrical steel sheet that can improve magnetic flux density. In the present disclosure, when a steel material having a predetermined chemical composition is sequentially subjected to hot rolling, cold rolling, decarburization annealing, application of an annealing separator, and final annealing, the storage conditions between the final cold rolling and decarburization annealing of a cold-rolled sheet coil and the temperature fluctuation control conditions set during the heating process of decarburization annealing are controlled.

## Description

### TECHNICAL FIELD

The present disclosure relates to a method of producing a grain-oriented electrical steel sheet with high magnetic flux density.

### BACKGROUND

Grain-oriented electrical steel sheets are soft magnetic materials used as iron core materials for transformers, and have crystal microstructures in which the <001> orientation, which is an easy magnetization axis of iron, is highly accorded with the rolling direction of the steel sheets. In such a grain-oriented electrical steel sheet, the iron loss decreases as the grain is finer.

In the decarburization annealing process during the production of a grain-oriented electrical steel sheet, the temperature inside the steel sheet (cold-rolled sheet) can be made uniform by adjusting the temperature for a predetermined time within a temperature range in which recovery occurs when rapidly heating the steel sheet, and the effect of rapid heating can be obtained across the entire width of the steel sheet.

Furthermore, it is known that by adjusting the temperature for a predetermined time in the temperature range in which such recovery occurs, the <111>//ND orientation preferentially recovers, reducing the <111>//ND orientation after primary recrystallization, and instead increasing Goss nuclei, resulting in finer grains in the recrystallization after secondary recrystallization.

These effects make it possible to obtain a grain-oriented electrical steel sheet with low iron loss (see, for example, Patent Literature (PTL) 1).

### CITATION LIST

### Patent Literature

PTL 1: WO 2014/017589 A1

### SUMMARY

### (Technical Problem)

However, even with the production process for grain-oriented electrical steel sheets described in PTL 1, when secondary recrystallization occurs, both highly oriented, ideal Goss grains with a deviation of 5° or less from (110)[001] and less oriented Goss grains with a deviation of more than 5° to 10° or less grow to enormous sizes.

Therefore, one remaining challenge in increasing magnetic flux density has been to selectively promote the growth of only highly oriented ideal Goss grains from among the less oriented, misaligned Goss grains.

The present disclosure has been made in view of the above circumstances and aims to provide a method of producing a grain-oriented electrical steel sheet that preferentially grows highly oriented Goss grains to exhibit a high magnetic flux density.

### (Solution to Problem)

We conducted thorough research to achieve the aforementioned aim. As a result, we focused on performing an aging treatment under specific conditions on the coiled steel sheet (cold-rolled sheet) during the time between the completion of the final cold rolling and the start of decarburization annealing, which also serves as primary recrystallization annealing; and controlling the temperature under specific conditions during the heating process of the subsequent decarburization annealing. Furthermore, we discovered that these process controls can improve the orientation of the Goss grains and increase the magnetic flux density of the resulting grain-oriented electrical steel sheet, thereby completing the present disclosure.

The present disclosure has been made based on these discoveries.

We provide the following.
[1] A method of producing a grain-oriented electrical steel sheet, comprising:
   hot rolling a steel material containing (consisting of), by mass%, C: 0.002 % to 0.100 %, Si: 2.00 % to 4.50 %, and Mn: 0.01 % to 0.50 %, with the balance being Fe and inevitable impurities, to obtain a hot-rolled sheet;
   optionally subjecting the hot-rolled sheet to hot-rolled sheet annealing to obtain a hot-rolled and annealed sheet, and subsequently subjecting the hot-rolled sheet or the hot-rolled and annealed sheet to cold rolling once, or two or more times with intermediate annealing in between, to obtain a cold-rolled sheet having a final sheet thickness;
   subjecting the cold-rolled sheet to decarburization annealing that also serves as primary recrystallization annealing to obtain a decarburized annealed sheet; and
   subsequently applying an annealing separator to a surface of the decarburized annealed sheet and performing final annealing to obtain a grain-oriented electrical steel sheet, wherein
   during a period from an end of a final cold rolling in the cold rolling until a start of the decarburization annealing, when storing a coil formed by winding the cold-rolled sheet, an average storage temperature of the coil is 150 °C or lower, and a storage time is 3 hours to 360 hours, and
   during a heating process in the decarburization annealing, temperature fluctuation control is performed in a range of -20 °C/s to +20 °C/s within a range in which an average temperature T, in °C, and a time t, in s, satisfy expressions (1) to (3): $\begin{matrix}\frac{6.25}{{t}^{3}} + 190 \leq T \left(1\right) \\ T \leq 400 \left(2\right) \\ t \leq 5.0 \left(3\right)\end{matrix}$
[2] The method of producing a grain-oriented electrical steel sheet according to [1], wherein the steel material further contains, in mass%, one or more selected from the group consisting of Al: 0.005 % to 0.050 %, N: 0.0030 % to 0.0200 %, Se: 0.003 % to 0.030 %, and S: 0.002 % to 0.030 %.
[3] The method of producing a grain-oriented electrical steel sheet according to [1] or [2], wherein the steel material further contains one or more elements selected from at least one group among group A to group D:
   group A:
      in mass%, Sn: 0.005 % to 0.500 %, Cr: 0.005 % to 0.500 %, Cu: 0.010 % to 0.500 %, Ni: 0.01 % to 0.50 %, Bi: 0.005 % to 0.500 %, P: 0.005 % to 0.500 %, Sb: 0.005 % to 0.500 %, and Mo: 0.005 % to 0.500 %;
   group B:
      in mass% or mass ppm, B: 0.1 ppm to 25.0 ppm, Nb: 0.001 % to 0.020 %, Ti: 0.0005 % to 0.0400 %, V: 0.001 % to 0.020 %, and Co: 0.002 % to 0.050 %;
   group C:
      in mass%, As: 0.0010 % to 0.0200 %, Pb: 0.0001 % to 0.0100 %, W: 0.0010 % to 0.0100 %, and Zn: 0.001 % to 0.020 %;
   group D:
      in mass%, Ag: 0.001 % to 0.050 %, Au: 0.001 % to 0.050 %, Ca: 0.001 % to 0.020 %, Ga: 0.0001 % to 0.0050 %, Ge: 0.0001 % to 0.0050 %, Nd: 0.001 % to 0.020 %, and La: 0.001 % to 0.020 %.

### (Advantageous Effect)

According to the present disclosure, it is possible to provide a method for manufacturing a grain-oriented electrical steel sheet that improves the orientation of Goss grains in the steel sheet (decarburized annealed sheet) after primary recrystallization is complete, thereby improving the magnetic flux density of the grain-oriented electrical steel sheet as a product sheet.

### BRIEF DESCRIPTION OF THE DRAWINGS

In the accompanying drawings:
FIG. 1 is a graph illustrating the magnetic flux density B₈ for each storage time from the end of the final cold rolling to the start of decarburization annealing;
FIG. 2 is a graph illustrating the magnetic flux density B₈ for each average storage temperature from the end of the final cold rolling to the start of decarburization annealing;
FIG. 3 is a graph illustrating the magnetic flux density B₈ for each heating or cooling rate in temperature fluctuation control; and
FIG. 4 is a graph summarizing the evaluation results of magnetic flux density B₈ against the average temperature T and time t in temperature fluctuation control.

### DETAILED DESCRIPTION

First, experiments that led to the development of the present disclosure are described.

Hereinafter, any numerical range expressed using "to" means a range that includes the numerical values before and after "to" as the lower limit and the upper limit, respectively. Furthermore, when a unit is attached to only one of the numbers before or after "to", the same unit shall apply to the other number as well, unless otherwise specified.

### <Experiment 1>

Steel slabs were produced by continuous casting, the steel slabs being a steel material containing, in mass%, C: 0.070 %, Si: 3.35 %, Mn: 0.10 %, Se: 0.013 %, S: 0.004 %, with the balance being Fe and inevitable impurities. The steel slabs were heated to a temperature of 1420 °C, then hot rolled to produce hot-rolled sheets with a thickness of 2.4 mm. The hot-rolled sheets were subjected to hot-rolled sheet annealing under a set of conditions including 1000 °C for 50 s to obtain hot-rolled and annealed sheets. The hot-rolled and annealed sheets were subjected to primary cold rolling to obtain an intermediate thickness of 1.8 mm, then to intermediate annealing under a set of conditions including 1100 °C for 20 s, and then to secondary cold rolling to be finished as cold-rolled sheets with a final sheet thickness of 0.27 mm. The finished cold-rolled sheets were wound into coils.

Here, after the completion of the secondary cold rolling, which is the final cold rolling process, coils of the cold-rolled sheets were stored at an average storage temperature of 100 °C for different storage times ranging from 1 hour to 456 hours. More specifically, the storage time was varied in increasing order, i.e., 1 hour, 2 hours, 3 hours, 12 hours, up to 456 hours.

Each coil after storage was subjected to decarburization annealing, which also served as primary recrystallization annealing, under a set of conditions including a mixed atmosphere of H₂ and N₂, with a holding temperature of 840 °C and a holding time of 100 s. In this decarburization annealing process, the heating was started at a rate of 200 °C/s, and during this heating process, temperature fluctuation control was performed under a set of conditions including a heating rate of 10 °C/s, an average temperature of 300 °C, and a time of 1.0 s. Subsequently, the temperature was raised again to 600 °C at a rate of 200 °C/s. Furthermore, the temperature was raised at a rate of 25 °C/s until reaching the aforementioned holding temperature, and after holding for the aforementioned holding time, the steel was allowed to cool naturally.

Next, an annealing separator mainly composed of MgO was applied to the surface of the steel sheet (decarburized annealed sheet) and dried. Subsequently, final annealing was performed at a maximum temperature of 1200 °C to obtain a grain-oriented electrical steel sheet. During this final annealing, a purification treatment was also performed by holding the steel sheet at 1150 °C or higher in a hydrogen atmosphere for 10 hours.

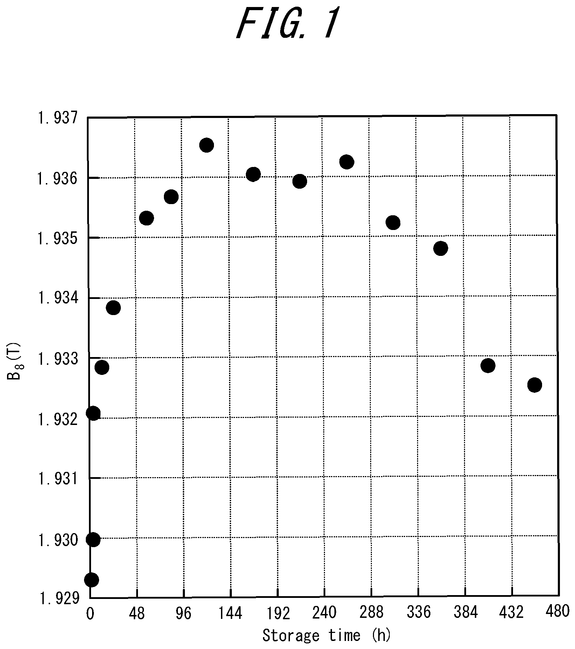

For each grain-oriented electrical steel sheet thus obtained after final annealing, the magnetic flux density B₈ (magnetic flux density when a magnetic field of 800 A/m is applied) was measured using the method described in JIS C2556. The results are illustrated in FIG. 1.

It is clear from FIG. 1 that when the storage time (aging time) of the cold-rolled sheet coil between the end of the final cold rolling and the start of decarburization annealing is between 3 hours and 360 hours, a grain-oriented electrical steel sheet with a high magnetic flux density can be obtained.

### <Experiment 2>

Cold-rolled sheet coils with a final sheet thickness obtained under the same set of conditions as in Experiment 1 were used. The coils were stored at different average storage temperatures ranging from 0 °C to 180 °C for 200 hours after the completion of the secondary cold rolling, which was the final cold rolling.

Each coil after storage was subjected to decarburization annealing, which also served as primary recrystallization annealing, under a set of conditions including a mixed atmosphere of H₂ and N₂, with a holding temperature of 840 °C and a holding time of 100 s. In this decarburization annealing process, the heating was started at a rate of 200 °C/s, and during this heating process, temperature fluctuation control was performed under a set of conditions including a heating rate of 10 °C/s, an average temperature of 300 °C, and a time of 1.0 s. Subsequently, the temperature was raised again to 600 °C at a rate of 200 °C/s. Furthermore, the temperature was raised at a rate of 25 °C/s until reaching the aforementioned holding temperature, and after holding for the aforementioned holding time, the steel was allowed to cool naturally.

Next, an annealing separator mainly composed of MgO was applied to the surface of the steel sheet (decarburized annealed sheet) and dried. Subsequently, final annealing was performed at a maximum temperature of 1200 °C to obtain a grain-oriented electrical steel sheet. During this final annealing, a purification treatment was also performed by holding the steel sheet at 1150 °C or higher in a hydrogen atmosphere for 10 hours.

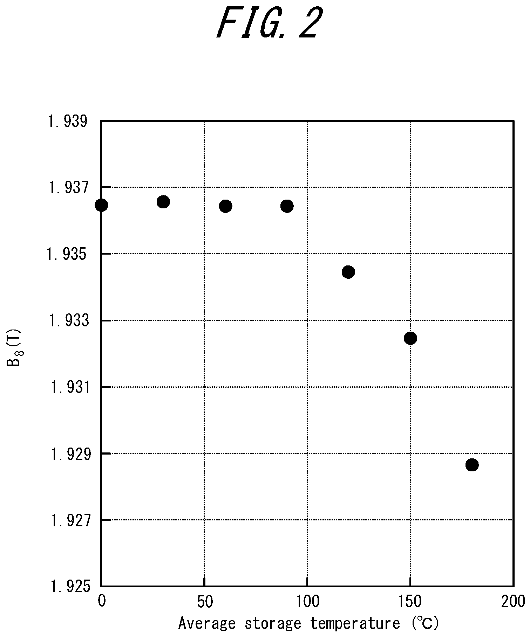

For each grain-oriented electrical steel sheet thus obtained after final annealing, the magnetic flux density B₈ (magnetic flux density when a magnetic field of 800 A/m is applied) was measured using the method described in JIS C2556. The results are illustrated in FIG. 2.

It is clear from FIG. 2 that by keeping the average storage temperature of the cold-rolled sheet coil between the end of the final cold rolling and the start of decarburization annealing in the range of 150 °C or less (0 °C to 150 °C in the example of FIG. 2), a grain-oriented electrical steel sheet with a high magnetic flux density can be obtained.

### <Experiment 3>

Cold-rolled sheet coils with a final sheet thickness obtained under the same set of conditions as in Experiment 1 were used. The coils were stored at an average storage temperature of 30 °C for 200 hours after the completion of the secondary cold rolling, which was the final cold rolling.

Each coil after storage was subjected to decarburization annealing, which also served as primary recrystallization annealing, under a set of conditions including a mixed atmosphere of H₂ and N₂, with a holding temperature of 840 °C and a holding time of 100 s. In this decarburization annealing process, the heating was started at a rate of 200 °C/s, and during this heating process, temperature fluctuation control was performed under a set of conditions including a heating rate or cooling rate in the range of -30 °C/s to +30 °C/s, an average temperature of 300 °C, and a time of 1.0 s. Subsequently, the temperature was raised again to 600 °C at a rate of 200 °C/s. Furthermore, the temperature was raised at a rate of 25 °C/s until reaching the aforementioned holding temperature, and after holding for the aforementioned holding time, the steel was allowed to cool naturally.

Here, when the heating or cooling rate in the aforementioned temperature fluctuation control has a positive sign (+), it is treated the same as when there is no sign, meaning that the coil temperature rises as time progresses in the temperature fluctuation control. On the other hand, when the heating or cooling rate in the aforementioned temperature fluctuation control has a negative sign (-), it means that the coil temperature decreases as time progresses in the temperature fluctuation control.

Next, an annealing separator mainly composed of MgO was applied to the surface of the steel sheet (decarburized annealed sheet) and dried. Subsequently, final annealing was performed at a maximum temperature of 1200 °C to obtain a grain-oriented electrical steel sheet. During this final annealing, a purification treatment was also performed by holding the steel sheet at 1150 °C or higher in a hydrogen atmosphere for 10 hours.

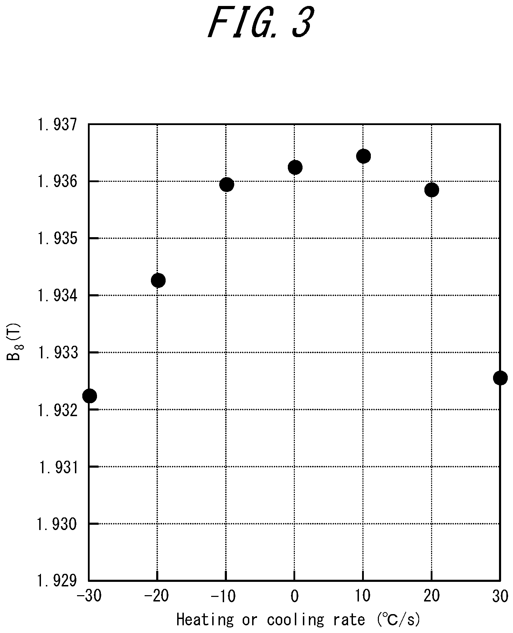

For each grain-oriented electrical steel sheet thus obtained after final annealing, the magnetic flux density B₈ (magnetic flux density when a magnetic field of 800 A/m is applied) was measured using the method described in JIS C2556. The results are illustrated in FIG. 3.

It is clear from FIG. 3 that by setting the heating or cooling rate within a range of -20 °C/s to 20 °C/s during the temperature fluctuation control in the decarburization annealing process, a grain-oriented electrical steel sheet with a high magnetic flux density can be obtained.

### <Experiment 4>

Cold-rolled sheet coils with a final sheet thickness obtained under the same set of conditions as in Experiment 1 were used. The coils were stored at an average storage temperature of 50 °C for 200 hours after the completion of the secondary cold rolling, which was the final cold rolling.

Each coil after storage was subjected to decarburization annealing, which also served as primary recrystallization annealing, under a set of conditions including a mixed atmosphere of H₂ and N₂, with a holding temperature of 840 °C and a holding time of 100 s. In this decarburization annealing process, the heating was started at a rate of 200 °C/s, and during this heating process, temperature fluctuation control was performed at a heating rate of 10 °C/s, an average temperature of 150 °C to 420 °C, and a time ranging from 0.2 s to 8.0 s. Subsequently, the temperature was raised again to 600 °C at a rate of 200 °C/s. Furthermore, the temperature was raised at a rate of 25 °C/s until reaching the aforementioned holding temperature, and after holding for the aforementioned holding time, the steel was allowed to cool naturally.

Next, an annealing separator mainly composed of MgO was applied to the surface of the steel sheet (decarburized annealed sheet) and dried. Subsequently, final annealing was performed at a maximum temperature of 1200 °C to obtain a grain-oriented electrical steel sheet. During this final annealing, a purification treatment was also performed by holding the steel sheet at 1150 °C or higher in a hydrogen atmosphere for 10 hours.

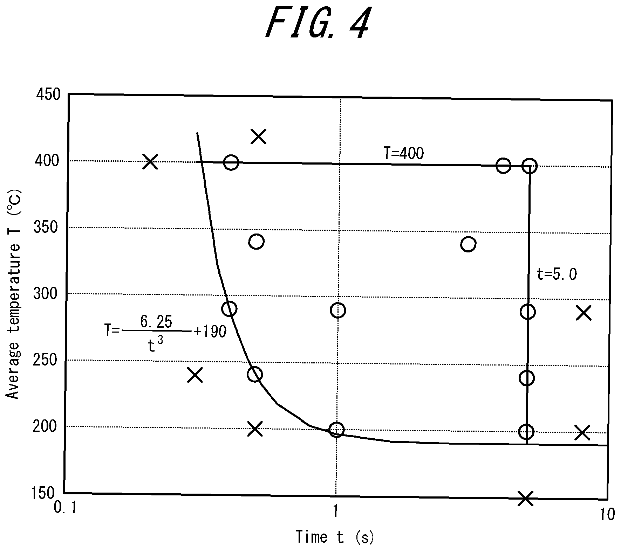

For each grain-oriented electrical steel sheet thus obtained after final annealing, the magnetic flux density B₈ (magnetic flux density when a magnetic field of 800 A/m is applied) was measured using the method described in JIS C2556. The results are illustrated in FIG. 4.

In FIG. 4, the magnetic flux density B₈ of each grain-oriented electrical steel sheet under temperature fluctuation control at different average temperatures T and times t is indicated on the graph as ○ (good) for a value of 1.928 T or more and × (poor) for a value of less than 1.928 T.

It is clear from FIG. 4 that when the average temperature T and time t during the temperature fluctuation control in the decarburization annealing process satisfy all of the following expression (1) to (3), a grain-oriented electrical steel sheet with a high magnetic flux density can be obtained.$\begin{matrix}\frac{6.25}{{t}^{3}} + 190 \leq T \left(1\right) \\ T \leq 400 \left(2\right) \\ t \leq 5.0 \left(3\right)\end{matrix}$

The reason why satisfying the above conditions results in good magnetic flux density is not clear, but we think the reason is as follows.

First, by applying the above-described storage conditions, namely, a predetermined average storage temperature and predetermined storage time, to the cold-rolled sheet coils during storage from the end of the final cold rolling until the start of decarburization annealing, it is thought that the amount of dislocations locked by interstitial elements such as C and N through aging was optimized.

Locked dislocations are less prone to elemental migration than unlocked dislocations. Therefore, differences in dislocation density within a steel sheet (cold-rolled sheet) act as a driving force for nucleation during primary recrystallization. Consequently, in the case of numerous locked dislocations, the dislocations are evenly distributed throughout the steel sheet sample, and as a result, even if the above-described temperature fluctuation control is performed in the recovery temperature range, sufficient elemental migration does not occur, making it difficult to establish a difference in dislocation density within the steel sheet. In other words, the amount of dislocations locked by interstitial elements needs to be appropriately controlled by aging.

Here, aging occurs during the storage of cold-rolled sheet coils from the end of the final cold rolling until the start of decarburization annealing. By setting the average storage temperature and storage time during storage to the above-described predetermined conditions, the amount of locked dislocations in the cold-rolled sheet can be controlled, and highly oriented Goss grains can be preferentially nucleated during primary recrystallization. Furthermore, it is thought that controlling the amount of dislocations and fostering nucleation in this way improved the orientation of the grains, resulting in an improved magnetic flux density of the grain-oriented electrical steel sheet.

Furthermore, performance of the aforementioned predetermined temperature fluctuation control, which involves a relatively slow temperature change over time during the rapid heating process, as a decarburization annealing condition after storage led to appropriate dislocation movement, which is thought to have resulted in a higher magnetic flux density in the grain-oriented electrical steel sheet.

Even when the above-described predetermined temperature fluctuation control is performed, elemental migration is thought to occur in locked dislocations if the control is performed at high temperatures or over a long period of time. In this case, the migration of locked dislocations homogenizes the dislocation density distribution throughout the steel sheet sample, making it difficult for differences in dislocation density to arise within the sample.

On the other hand, if the above-described temperature fluctuation control is performed at too low a temperature or for too short a duration, elemental migration will not occur even in unlocked dislocations, despite the performance of temperature fluctuation control.

In other words, with temperature fluctuation control at low temperatures or short durations falling below the predetermined conditions, dislocation movement does not occur regardless of whether the dislocations are locked, resulting in dislocations being evenly distributed throughout the entire steel sheet sample. As a result, the dislocation density difference within the steel sheet is small, and the driving force for primary recrystallization nucleation is weak.

Therefore, it is necessary to appropriately control dislocation movement due to recovery by managing temperature fluctuations with an optimal average temperature T and time t that satisfy all of the above-described expressions (1) to (3).

In the present disclosure, through storage and temperature fluctuation control of the cold-rolled sheet in this manner, locked dislocations do not move, whereas unlocked dislocations recover, thus allowing for the selective movement of dislocations.

In other words, in the present disclosure, by storing the coil and performing temperature fluctuation control under the above-described predetermined conditions, the dislocation density within the steel sheet can be effectively controlled, and highly oriented Goss grains can be preferentially nucleated during primary recrystallization, thereby improving orientation. Improvement in the magnetic flux density of the resulting grain-oriented electrical steel sheet is therefore expected.

### <Method of producing grain-oriented electrical steel sheet>

In the method of producing a grain-oriented electrical steel sheet of the present disclosure, a grain-oriented electrical steel sheet is obtained by subjecting a steel material having a predetermined chemical composition sequentially to hot rolling, optional hot-rolled sheet annealing, cold rolling and optional intermediate annealing, decarburization annealing that also serves as primary recrystallization annealing, application of an annealing separator, and final annealing. The production method of the present disclosure may further include other processes in addition to these basic processes.

In the production method of the present disclosure, when carrying out these basic processes, it is essential to store the cold-rolled sheet coil at a predetermined average storage temperature and storage time between the end of the final cold rolling in the cold rolling process and the start of the decarburization annealing process; and to perform temperature fluctuation control on the cold-rolled sheet coil at a predetermined average temperature T, time t, and heating or cooling rate during the heating process in the decarburization annealing process. By implementing this storage treatment and temperature fluctuation control, a grain-oriented electrical steel sheet capable of exhibiting high magnetic flux density, as described above, can be produced.

### [Chemical composition]

First, the chemical composition of the steel material (steel slab) used in the method of producing a grain-oriented electrical steel sheet will be described. Note that unless otherwise specified, the " %" used to represent the content of the following elements refers to "mass%", and unless otherwise specified, the "ppm" used to represent the content of the following elements refers to "mass ppm".

### [C: 0.002 % to 0.100 %]

If the C content is less than 0.002 %, the grain boundary strengthening effect achieved by C is poor, and defects which hamper manufacture, such as slab cracks, appear. If the C content is more than 0.100 %, it is difficult to reduce the C content, by decarburization annealing, to an amount of 0.005 % or less at which magnetic aging does not occur. The C content therefore needs to be in the range of 0.002 % to 0.100 %. The C content is preferably 0.010 % or more. The C content is preferably 0.080 % or less.

### [Si: 2.00 % to 4.50 %]

Si is an element necessary to increase specific resistance of steel and reduce iron loss. These effects are not sufficient when the Si content is less than 2.00 %. If the Si content is more than 4.50 %, workability decreases and production by rolling is difficult. The Si content therefore needs to be in the range of 2.00 % to 4.50 %. The Si content is preferably 2.50 % or more. The Si content is preferably 4.00 % or less.

### [Mn: 0.01 % to 0.50 %]

Mn is an element necessary to improve the hot workability of the steel. This effect is not sufficient when the Mn content is less than 0.01 mass%. On the other hand, when the Mn content exceeds 0.50 %, the magnetic flux density of the grain-oriented electrical steel sheet used as a product sheet decreases. The Mn content therefore needs to be in the range of 0.01 % to 0.50 %. The Mn content is preferably 0.02 % or more. The Mn content is preferably 0.20 % or less.

The balance other than the aforementioned basic elements C, Si, and Mn in the steel material can be Fe and inevitable impurities.

Furthermore, in addition to the aforementioned elements C, Si, and Mn, the elements Al, N, S, and/or Se may be further included to induce secondary recrystallization. The preferred contents of Al, N, S, and Se differ depending on whether an inhibitor is used.

First, the case in which an inhibitor is used to induce secondary recrystallization will be described. For example, when using an AlN-based inhibitor, Al and N are preferably included in the ranges of Al: 0.005 % to 0.050 % and N: 0.0030 % to 0.0200 %.

Furthermore, when using a MnS/MnSe-based inhibitor, the above-described content of Mn and one or both of S: 0.002 % to 0.030 % and Se: 0.003 % to 0.030 % are preferably included.

If the added amount of each element is less than the aforementioned lower limit, the inhibitory effect will not be sufficiently obtained. On the other hand, if the upper limit is exceeded, the inhibitor component remains non-solute during slab heating, leading to a decrease in magnetic properties.

AlN-based and MnS/MnSe-based inhibitors may be used in combination.

Next, the case in which an inhibitor is not used to induce secondary recrystallization will be described. In this case, the content of the above-described inhibitor-forming components, Al, N, S, and Se, is preferably reduced insofar as possible. Specifically, it is preferable to use a steel material in which the content of Al is reduced to less than 0.005 %, N to less than 0.0050 %, S to less than 0.005 %, and Se to less than 0.003 %.

Furthermore, to improve magnetic properties, one or more elements selected from Group A, i.e., the group consisting of Sn: 0.005 % to 0.500 %, Cr: 0.005 % to 0.500 %, Cu: 0.010 % to 0.500 %, Ni: 0.01 % to 0.50 %, Bi: 0.005 % to 0.500 %, P: 0.005 % to 0.500 %, Sb: 0.005 % to 0.500 %, and Mo: 0.005 % to 0.500 %, may be added as appropriate.

In addition to or instead of the above, one or more elements selected from Group B, i.e., the group consisting of B: 0.1 ppm to 25.0 ppm, Nb: 0.001 % to 0.020 %, Ti: 0.0005 % to 0.0400 %, V: 0.001 % to 0.020 %, and Co: 0.002 % to 0.050 %, may be added as appropriate.

Furthermore, in addition to or instead of the above, one or more elements selected from Group C, i.e., the group consisting of As: 0.0010 % to 0.0200 %, Pb: 0.0001 % to 0.0100 %, W: 0.0010 % to 0.0100 %, and Zn: 0.001 % to 0.020 %, may be added as appropriate.

Finally, in addition to or instead of the above, one or more elements selected from Group D, i.e., the group consisting of Ag: 0.001 % to 0.050 %, Au: 0.001 % to 0.050 %, Ca: 0.001 % to 0.020 %, Ga: 0.0001 % to 0.0050 %, Ge: 0.0001 % to 0.0050 %, Nd: 0.001 % to 0.020 %, and La: 0.001 % to 0.020 %, may be added as appropriate.

Elements selected from groups A through D may be optionally added in combination with one another within the respective content ranges described above.

### [Production process]

Next, each process in the method of producing a grain-oriented electrical steel sheet will be described.

### [Preparation of steel material]

Steel having the above-described chemical composition can be melted using a conventional refining process, and steel material (steel slab) can then be produced using a conventionally known ingot-making/blooming method or continuous casting method. Alternatively, steel material (thin slab or thinner cast steel) with a thickness of 100 mm or less may be produced from molten steel by direct casting.

### [Hot rolling]

The steel material can be heated according to a conventional method to approximately 1400 °C, for example, in the case of containing inhibitor components. On the other hand, in the case of not containing inhibitor components, the steel material can be heated to a temperature of 1250 °C or lower. Next, the steel material is subjected to hot rolling according to a conventional method to produce a hot-rolled sheet.

Furthermore, in the case of not containing inhibitor components, the steel material may be hot rolled immediately after casting without heating.

### [Hot-rolled sheet annealing]

The resulting hot-rolled sheet may be subjected to hot-rolled sheet annealing as needed to obtain a hot-rolled and annealed sheet. To obtain good magnetic properties, the annealing temperature for this hot-rolled sheet annealing is preferably in the range of 800 °C to 1150 °C. If the annealing temperature is below 800 °C, the band texture formed by hot rolling remains, making it difficult to obtain a primary recrystallized texture with uniformly-sized grains, and the development of secondary recrystallization may be inhibited. On the other hand, if the annealing temperature exceeds 1150 °C, the grain size after hot-rolled sheet annealing becomes too coarse, again making it difficult to obtain a primary recrystallized texture with uniformly-sized grains.

### [Cold rolling and intermediate annealing]

The resulting hot-rolled sheet or hot-rolled and annealed sheet is subjected to cold rolling once or cold rolling two or more times with intermediate annealing in between to obtain a cold-rolled sheet having a final sheet thickness. The annealing temperature for intermediate annealing is preferably in a range from 900 °C to 1200 °C. When the annealing temperature is below 900 °C, finer recrystallized grains will be obtained after the intermediate annealing, and there will be fewer nuclei with Goss orientation in the primary recrystallized texture, which tends to degrade the magnetic properties of the grain-oriented electrical steel sheet as a product sheet. On the other hand, if the annealing temperature exceeds 1200 °C, the crystal grains become too coarse, making it difficult to obtain a primary recrystallized texture with uniformly-sized grains, as in the case of hot-rolled sheet annealing.

Furthermore, in the cold rolling that determines the final sheet thickness (final cold rolling), the steel sheet temperature is preferably raised to 100 °C to 300 °C during cold rolling. In the final cold rolling, one or more aging treatments are preferably performed at a steel sheet temperature of 100 °C to 300 °C during the cold rolling process. These processes are effective in improving the primary recrystallized texture and enhancing the magnetic properties of the grain-oriented electrical steel sheet.

### [Coil storage]

In the present disclosure, it is important to store the coil formed by winding the cold-rolled sheet so that the average storage temperature is 150 °C or lower and the storage time is 3 hours or longer and 360 hours or shorter from the end of the final cold rolling process until the start of decarburization annealing, which is the next process.

The average storage temperature is preferably 120 °C or lower. Furthermore, from a cost perspective, the average storage temperature of is preferably 0 °C or higher.

The storage time is preferably four hours or longer. Furthermore, the storage time is preferably less than 360 hours.

The end of the final cold rolling process is defined as when the rolling in the cold rolling process is completed and the resulting cold-rolled sheet is wound into a coil. Furthermore, the start of the decarburization annealing is the moment the sample (usually a cold-rolled sheet coil) is placed in the furnace.

The average storage temperature is sufficient if the average temperature of the cold-rolled sheet coil from the end of the final cold rolling to the start of the decarburization annealing satisfies the above-described predetermined range. Therefore, the temperature hysteresis during storage is not a concern, such as one or more instances of instantaneous heating by pulse waves, multi-stage heating, multi-stage cooling, slow heating, slow cooling, and soaking.

The average storage temperature can be determined by continuously measuring the surface temperature history of the cold-rolled sheet coil during storage using a thermometer and then calculating the average temperature value automatically.

### [Decarburization annealing and temperature fluctuation control]

Subsequently, decarburization annealing, which also serves as primary recrystallization annealing, is performed to obtain a decarburized annealed sheet. From the perspective of decarburization effectiveness, the annealing temperature is preferably set and maintained in the range of 800 °C to 900 °C during this decarburization annealing. Furthermore, the steel may subsequently be allowed to cool naturally. From the perspective of achieving good controllability of the decarburization amount, a mixed atmosphere of hydrogen and nitrogen and a humid atmosphere are preferably used as the atmosphere for the decarburization annealing. In addition, when the steel sheet (cold-rolled sheet) is subjected to nitriding, a mixed gas containing hydrogen, nitrogen, and ammonia is preferably used.

An important aspect of the present disclosure is the provision of temperature fluctuation control under the above-described predetermined conditions during the decarburization annealing process. In other words, during the heating process of decarburization annealing, heating (slow heating), soaking, or cooling (slow cooling) is performed at a heating rate or cooling rate of ±20 °C/s or less, under a set of conditions including an average temperature T (°C) and time t (s) that satisfy the following expressions (1), (2), and (3).

The heating or cooling rate is preferably -15 °C/s or more. The heating or cooling rate is more preferably -10 °C/s or more. The heating or cooling rate is preferably 15 °C/s or less. The heating or cooling rate is more preferably 10 °C/s or less.$\begin{matrix}\frac{6.25}{{t}^{3}} + 190 \leq T \left(1\right) \\ T \leq 400 \left(2\right) \\ t \leq 5.0 \left(3\right)\end{matrix}$

Here, the average temperature T in temperature fluctuation control does not depend on the temperature hysteresis during control, such as one or more instances of instantaneous heating or cooling by pulse waves, multi-stage heating or cooling, or soaking, as long as the aforementioned conditions are satisfied. Furthermore, the heating rate in the temperature range from the coil temperature at the end of storage to 600 °C is the heating rate during a period excluding the time in which temperature fluctuation control is performed.

### [Application of annealing separator and final annealing]

The decarburized annealed sheet that has thus undergone decarburization annealing is then coated with an annealing separator on one or both sides and subjected to final annealing to produce a grain-oriented electrical steel sheet.

When prioritizing iron loss characteristics and forming a forsterite film on a steel sheet, an annealing separator mainly composed of MgO can be applied to the surface of the steel sheet and dried before the steel sheet is subjected to final annealing. This facilitates the development of a highly concentrated secondary recrystallized structure in the Goss orientation during the final annealing, as well as the formation of a forsterite film.

On the other hand, in the case of prioritizing punching workability and not forming a forsterite film, it is preferable not to apply an annealing separator, or to use an annealing separator mainly composed of silica or alumina and then perform final annealing.

Furthermore, if a forsterite film is not to be formed, an electrostatic coating that does not introduce moisture is also an effective method for applying the annealing separator. Alternatively, a heat-resistant inorganic material sheet (silica, alumina, mica) may be used as an annealing separator.

The annealing temperature in the final annealing is preferably 800 °C or higher to induce secondary recrystallization in the case of forming a forsterite film. Furthermore, for completion of the secondary recrystallization, the steel sheet is preferably held at a temperature of 800 °C or higher for 15 hours or more.

On the other hand, in the case of not forming a forsterite film, it suffices for secondary recrystallization to be completed. Hence, the annealing temperature is preferably in the range of 850 °C to 950 °C, and it is possible to complete the final annealing by simply holding the steel sheet in this temperature range for several hours or more.

In the case of performing purification treatment to prioritize iron loss characteristics, and/or the case of forming a forsterite film to reduce transformer noise, the annealing temperature in the final annealing is preferably raised to about 1200 °C.

### [Other processes]

To reduce iron loss in this grain-oriented electrical steel sheet after final annealing, it is effective to perform water washing, brushing, pickling, and the like to remove unreacted annealing separator adhered to the steel sheet surface, and then to perform flattening annealing for shape adjustment. The reason is that, generally, final annealing is performed with the steel in a coiled state, which can cause the coil to become coil set, potentially leading to a deterioration in characteristics during iron loss measurement.

Furthermore, in the case of using the grain-oriented electrical steel sheet in a stack, forming an insulating coating on the surface of the steel sheet before or after the flattening annealing is effective. In particular, to reduce iron loss, it is preferable to apply a tension-imparting coating that can impart tension to the steel sheet as the insulating coating.

To form the tension-imparting coating, a method in which the tension coating is applied via a binder, or a method in which inorganic material is deposited onto the surface layer of the steel sheet by a physical vapor deposition method or a chemical vapor deposition method, is preferably used, as this allows for the formation of an insulating coating with excellent coating adhesion and a significantly large iron loss reduction effect.

Furthermore, to reduce iron loss further, magnetic domain refining treatment is preferably performed. Useable treatment methods include generally practiced methods such as a method of forming grooves in the steel sheet after final annealing; a method of introducing thermal strain and/or impact strain in a linear or point pattern by laser irradiation, electron beam irradiation, or plasma irradiation; and a method of forming grooves by etching the surface of the steel sheet in an intermediate process, such as the cold-rolled sheet that has been cold rolled to the final sheet thickness.

In the method of producing a grain-oriented electrical steel sheet, any matters not specifically described in the present specification may be carried out using conventional methods.

### EXAMPLES

### [Example 1]

Steel slabs containing C: 0.070 %, Si: 3.35 %, Mn: 0.10 %, Al: 0.025 %, Se: 0.025 %, and N: 0.0120 %, with the balance being Fe and inevitable impurities, were produced by continuous casting. The steel slabs were heated to a temperature of 1420 °C, then hot rolled to produce hot-rolled sheets with a thickness of 2.6 mm. The hot-rolled sheets were subjected to hot-rolled sheet annealing under a set of conditions including 1050 °C for 40 s to obtain hot-rolled and annealed sheets. The hot-rolled and annealed sheets were subjected to primary cold rolling to an intermediate thickness of 1.9 mm, followed by intermediate annealing under a set of conditions including 1050 °C for 30 s, and then secondary cold rolling as the final cold rolling to produce cold-rolled sheets with a final sheet thickness of 0.23 mm. The finished cold-rolled sheets were wound into coils.

The cold-rolled sheet coils were stored between the end of the final cold rolling process, in which the final sheet thickness was attained, and the start of decarburization annealing. The storage conditions at this time were changed as listed in Table 1 with regard to the average storage temperature (°C) and storage time (h, hours).

Each coil after storage was subjected to decarburization annealing, which also served as primary recrystallization annealing, under a set of conditions including a mixed atmosphere of H₂ and N₂, with a holding temperature of 840 °C and a holding time of 100 s. In this decarburization annealing, the heating from the coil temperature after the end of storage was started at 200 °C/s, and during this heating process, temperature fluctuation control was performed under the conditions of the average temperature T (°C), time t (s, seconds), and heating or cooling rate (°C/s) listed in Table 1. Subsequently, the temperature was raised to 600 °C at a heating rate of 200 °C/s. Furthermore, the temperature was raised at a rate of 25 °C/s until reaching the aforementioned holding temperature, and after holding for the aforementioned holding time, the steel was allowed to cool naturally.

Next, an annealing separator mainly composed of MgO was applied to the surface of the decarburized annealed sheet and dried. Subsequently, final annealing was performed at a maximum temperature of 1200 °C to obtain a grain-oriented electrical steel sheet. During this final annealing, a purification treatment was also performed by holding the steel sheet at 1150 °C or higher in a hydrogen atmosphere for 10 hours.

For each grain-oriented electrical steel sheet thus obtained after final annealing, the magnetic flux density B₈ (T, tesla) when a magnetic field of 800 A/m was applied was measured using the method described in JIS C2556. The results are listed in Table 1.

In Table 1, the left-hand side of expression (1) is listed as the A value, as in expression (4) below. $A = \frac{6.25}{{t}^{3}} + 190$

**Table 1**

| No. | Storage conditions | | Temperature fluctuation control conditions | | | | Magnetic flux density B₈ (T) | Remarks |
|---|---|---|---|---|---|---|---|---|
| | Average storage temperature [°C] | Storage time (h) | Average temperature T (°C) | Time t (s) | Value of A from expression (1) | Heating or cooling rate (°C/s) | | |
| 1 | 0 | 120 | 290 | 1.0 | 196.3 | 10 | 1.931 | Example |
| 2 | 0 | 120 | 340 | 3.0 | 190.2 | 10 | 1.928 | Example |
| 3 | 0 | 240 | 290 | 1.0 | 196.3 | 10 | 1.929 | Example |
| 4 | 0 | 240 | 340 | 3.0 | 190.2 | 10 | 1.930 | Example |
| 5 | 30 | 1 | 290 | 1.0 | 196.3 | 10 | 1.925 | Comparative Example |
| 6 | 30 | 456 | 290 | 1.0 | 196.3 | 10 | 1.926 | Comparative Example |
| 7 | 30 | 120 | 200 | 0.5 | 240.0 | 10 | 1.925 | Comparative Example |
| 8 | 30 | 120 | 290 | 1.0 | 196.3 | 30 | 1.921 | Comparative Example |
| 9 | 30 | 120 | 290 | 1.0 | 196.3 | -30 | 1.925 | Comparative Example |
| 10 | 30 | 120 | 290 | 1.0 | 196.3 | 10 | 1.937 | Example |
| 11 | 30 | 120 | 340 | 3.0 | 190.2 | 10 | 1.934 | Example |
| 12 | 30 | 120 | 400 | 8.0 | 190.0 | 10 | 1.925 | Comparative Example |
| 13 | 30 | 240 | 290 | 1.0 | 196.3 | 10 | 1.934 | Example |
| 14 | 30 | 240 | 340 | 3.0 | 190.2 | 10 | 1.933 | Example |
| 15 | 90 | 120 | 290 | 1.0 | 196.3 | 10 | 1.935 | Example |
| 16 | 90 | 120 | 340 | 3.0 | 190.2 | 10 | 1.932 | Example |
| 17 | 90 | 240 | 290 | 1.0 | 196.3 | 10 | 1.931 | Example |
| 18 | 90 | 240 | 340 | 3.0 | 190.2 | 10 | 1.930 | Example |
| 19 | 180 | 120 | 290 | 1.0 | 196.3 | 10 | 1.924 | Comparative Example |

| | | | | | | | | |
|---|---|---|---|---|---|---|---|---|
| Note: A = 6.25/t^3 + 190 | | | | | | | | |

It is clear from Table 1 that a grain-oriented electrical steel sheet with a high magnetic flux density can be obtained by following the production method of the present disclosure.

### [Example 2]

Steel slabs having the chemical composition listed in Table 2, with the balance being Fe and inevitable impurities, were produced by continuous casting. The steel were heated to a temperature of 1200°C, then hot rolled to produce hot-rolled sheets with a thickness of 2.3 mm. The hot-rolled sheets were subjected to hot-rolled sheet annealing under a set of conditions including 1030 °C for 50 s to obtain hot-rolled and annealed sheets. The hot-rolled and annealed sheets were then subjected to cold rolling as the final cold rolling, resulting in cold-rolled sheets with a final sheet thickness of 0.23 mm. The finished cold-rolled sheets were wound into coils.

The cold-rolled sheet coils were stored between the end of the final cold rolling process, in which the final sheet thickness was attained, and the start of decarburization annealing. The storage conditions at this time were an average storage temperature of 30 °C and a storage time of 120 hours.

Each coil after storage was subjected to decarburization annealing, which also served as primary recrystallization annealing, under a set of conditions including a mixed atmosphere of H₂ and N₂, with a holding temperature of 830 °C and a holding time of 120 s. Following the decarburization annealing, the steel sheet was subjected to a nitriding treatment in a mixed atmosphere of H₂, N₂, and NH₃, thereby adjusting the nitrogen concentration in the steel sheet to 300 ppm.

In the aforementioned decarburization annealing, the heating from the coil temperature after the end of storage was started at 200 °C/s, and during this heating process, temperature fluctuation control was performed to maintain an average temperature T: 290 °C and time t: 1.0 s at a cooling rate of -5 °C/s. Subsequently, the temperature was raised to 600 °C at a heating rate of 200 °C/s. Furthermore, the temperature was raised at a rate of 25 °C/s until reaching the aforementioned holding temperature, and after holding for the aforementioned holding time, the steel was allowed to cool naturally.

Next, an annealing separator mainly composed of MgO was applied to the surface of the decarburized annealed sheet and dried. Subsequently, final annealing was performed at a maximum temperature of 1200 °C to obtain a grain-oriented electrical steel sheet. During this final annealing, a purification treatment was also performed by holding the steel sheet at 1150 °C or higher in a hydrogen atmosphere for 20 hours.

For each grain-oriented electrical steel sheet thus obtained after final annealing, the magnetic flux density B₈ (magnetic flux density when a magnetic field of 800 A/m is applied) was measured using the method described in JIS C2556. The results are listed in Table 2.

### [Table 2]

**Table 2**

| No. | Chemical composition of steel material (mass% if no unit is specified; ppm indicates mass ppm) | | | | Magnetic flux density B₈ (T) | Remarks |
|---|---|---|---|---|---|---|
| | C | Si | Mn | Other components | | |
| 20 | 0.058 | 3.25 | 0.07 | Al: 0.039, N: 0.0037, Se: 0.009, S: 0.011, Sn: 0.200, Cu: 0.310 | 1.935 | Example |
| 21 | 0.060 | 3.25 | 0.07 | Al: 0.035, N: 0.0043, Cr: 0.200, Ag: 0.013, Au: 0.011, Ni: 0.08 | 1.931 | Example |
| 22 | 0.062 | 3.11 | 0.08 | Al: 0.037, N: 0.0040, Bi: 0.012, P: 0.015, Sb: 0.034, Mo: 0.011 | 1.932 | Example |
| 23 | 0.024 | 2.85 | 0.15 | Al: 0.025, N: 0.0022, S: 0.005, Se: 0.010, Co: 0.005, Pb: 0.0030 | 1.932 | Example |
| 24 | 0.061 | 3.28 | 0.07 | Al: 0.024, N: 0.0067, Se: 0.020, Ni: 0.06, Zn: 0.003 | 1.931 | Example |
| 25 | 0.084 | 3.67 | 0.04 | Al: 0.034, N: 0.0036, B: 8.0 ppm, Nb: 0.008, Ti: 0.0019, V: 0.006, As: 0.0041 | 1.933 | Example |
| 26 | 0.059 | 3.16 | 0.06 | Al: 0.035, N: 0.0033, Zn: 0.005, Pb: 0.0022, W: 0.0036, Co: 0.014, Ga: 0.0014 | 1.930 | Example |
| 27 | 0.045 | 3.65 | 0.03 | Al: 0.020, N: 0.0100, Ga: 0.0060, Sn: 0.025, P: 0.007 | 1.934 | Example |
| 28 | 0.060 | 3.20 | 0.06 | Al: 0.035, N: 0.0034, Ge: 0.0011, Ca: 0.004, Nd: 0.004, La: 0.003 | 1.931 | Example |
| 29 | 0.015 | 2.99 | 0.24 | Al: 0.015, Cr: 0.007, Cu: 0.015, Mo: 0.020, Ti: 0.0015 | 1.930 | Example |

It is clear from Table 2 that a grain-oriented electrical steel sheet with a high magnetic flux density can be obtained by following the production method of the present disclosure.

## Claims

1. A method of producing a grain-oriented electrical steel sheet, comprising:
hot rolling a steel material containing, in mass%, C: 0.002 % to 0.100 %, Si: 2.00 % to 4.50 %, and Mn: 0.01 % to 0.50 %, with the balance being Fe and inevitable impurities, to obtain a hot-rolled sheet;
optionally subjecting the hot-rolled sheet to hot-rolled sheet annealing to obtain a hot-rolled and annealed sheet, and subsequently subjecting the hot-rolled sheet or the hot-rolled and annealed sheet to cold rolling once, or two or more times with intermediate annealing in between, to obtain a cold-rolled sheet having a final sheet thickness;
subjecting the cold-rolled sheet to decarburization annealing that also serves as primary recrystallization annealing to obtain a decarburized annealed sheet; and
subsequently applying an annealing separator to a surface of the decarburized annealed sheet and performing final annealing to obtain a grain-oriented electrical steel sheet, wherein
during a period from an end of a final cold rolling in the cold rolling until a start of the decarburization annealing, when storing a coil formed by winding the cold-rolled sheet, an average storage temperature of the coil is 150 °C or lower, and a storage time is 3 hours to 360 hours, and
during a heating process in the decarburization annealing, temperature fluctuation control is performed in a range of -20 °C/s to +20 °C/s within a range in which an average temperature T, in °C, and a time t, in s, satisfy expressions (1) to (3): $\begin{matrix}\frac{6.25}{{t}^{3}} + 190 \leq T \left(1\right) \\ T \leq 400 \left(2\right) \\ t \leq 5.0 \left(3\right)\end{matrix}$

2. The method of producing a grain-oriented electrical steel sheet according to claim 1, wherein the steel material further contains, in mass%, one or more selected from the group consisting of Al: 0.005 % to 0.050 %, N: 0.0030 % to 0.0200 %, Se: 0.003 % to 0.030 %, and S: 0.002 % to 0.030 %.

3. The method of producing a grain-oriented electrical steel sheet according to claim 1 or 2, wherein the steel material further contains one or more elements selected from at least one group among group A to group D:
group A:
in mass%, Sn: 0.005 % to 0.500 %, Cr: 0.005 % to 0.500 %, Cu: 0.010 % to 0.500 %, Ni: 0.01 % to 0.50 %, Bi: 0.005 % to 0.500 %, P: 0.005 % to 0.500 %, Sb: 0.005 % to 0.500 %, and Mo: 0.005 % to 0.500 %;
group B:
in mass% or mass ppm, B: 0.1 ppm to 25.0 ppm, Nb: 0.001 % to 0.020 %, Ti: 0.0005 % to 0.0400 %, V: 0.001 % to 0.020 %, and Co: 0.002 % to 0.050 %;
group C:
in mass%, As: 0.0010 % to 0.0200 %, Pb: 0.0001 % to 0.0100 %, W: 0.0010 % to 0.0100 %, and Zn: 0.001 % to 0.020 %;
group D:
in mass%, Ag: 0.001 % to 0.050 %, Au: 0.001 % to 0.050 %, Ca: 0.001 % to 0.020 %, Ga: 0.0001 % to 0.0050 %, Ge: 0.0001 % to 0.0050 %, Nd: 0.001 % to 0.020 %, and La: 0.001 % to 0.020 %.
